# FASCICULE DE BREVET EUROPEEN

(11) **EP 1 534 542 B1**
(45) Date de publication et mention de la délivrance du brevet: **10.01.2007**
(21) Numéro de dépôt: 03764915.9
(22) Date de dépôt: 27.05.2003
(51) Int. Cl.: B60C 15/00

(54) **PNEUMATIQUE AVEC ANCRAGE NON-LINEAIRE DE STRUCTURE DE RENFORT**
REIFEN MIT NICHTLINEARER VERSTÄRKUNGSSTRUKTURVERANKERUNG
TYRE WITH NON-LINEAR ANCHORING OF REINFORCING STRUCTURE

(30) Priorité: 23.07.2002 FR 0209355
(43) Date de publication de la demande: 01.06.2005
(73) Titulaire: Société de Technologie Michelin, 63000 Clermont-Ferrand (FR); MICHELIN Recherche et Technique S.A., 1763 Granges-Paccot (CH)
(72) Inventeur: GUERINON, Bernard, F-63100 Clermont-Ferrand (FR)
(74) Mandataire: Dequire, Philippe Jean-Marie Denis
(86) Numéro de dépôt international: PCT/EP2003/005534
(87) Numéro de publication internationale: WO 2004/009380

(56) Documents cités:
- WO-A-02/30690
- US-A- 2 966 933
- US-A- 5 232 033

## Description

La présente invention concerne les pneumatiques. Plus particulièrement, elle concerne l'ancrage de la structure de renfort de type carcasse dans les bourrelets du pneumatique.

Le renforcement de carcasse des pneumatiques est à l'heure actuelle constitué par une ou plusieurs nappes, le plus souvent radiales, retournées autour d'une ou de plusieurs tringles disposées dans les bourrelets. Ce retournement de la nappe autour de la tringle constitue le moyen permettant de fixer ou d'ancrer la nappe dans le bourrelet.

Cependant, il existe aujourd'hui des pneumatiques qui ne disposent pas du traditionnel retournement de nappe carcasse autour d'une tringle, ni même d'une tringle, selon le sens traditionnel de cet élément. Par exemple, le document EP 0 582 196, décrit une façon d'agencer une structure de renfort de type carcasse dans les bourrelets, en disposant de façon adjacente à ladite structure de renfort des filaments circonférentiels, le tout étant noyé dans un mélange caoutchoutique d'ancrage ou de liaison, de préférence à haut module d'élasticité. Plusieurs agencements sont proposés dans ce document. De manière générale, l'écartement ou la distance entre les fils circonférentiels et la structure de renfort de type carcasse est sensiblement constant tout le long de la zone d'ancrage. Ainsi, la reprise par les fils circonférentiels des efforts induits par la structure de renfort s'effectue en premier lieu et en grande partie par les fils circonférentiels situés radialement intérieurement. Il reste alors moins d'effort à récupérer par les autres fils circonférentiels de la zone d'ancrage.

Un pneumatique correspondant au préambule de la revendication 1 est décrit dans le document WO 02/30 690.

Par ailleurs, on observe une même distance entre les fils circonférentiels et la structure de renfort de type carcasse tant dans la portion radialement intérieure, dans laquelle les mouvements sont limités, que dans la portion radialement externe, où les mouvements ou déplacements sont plus importants dû au déplacement du flanc vers l'extérieur sous l'effet de la pression ou des efforts induits par exemple en virage.

Afin de pallier ces différents inconvénients, l'invention prévoit un pneumatique selon la revendication 1.

La variation de distance entre les fils circonférentiels et la structure de renfort de type carcasse en fonction de la position radiale desdits fils circonférentiels permet par exemple de réduire l'écart entre les niveaux de reprise des efforts par chacun des fils circonférentiels. On évite que certains fils circonférentiels supportent une proportion très importante de la charge et se retrouvent en surcharge alors que d'autres sont sous-utilisés. La zone d'ancrage est alors plus homogène, plus endurante et durable. Les efforts pouvant être mieux répartis, les niveaux de contraintes ultimes supportés peuvent être supérieurs.

Ladite progression de la position axiale de chacun des enroulements par rapport à la structure de renfort de type carcasse est avantageusement agencée de sorte que :
- un premier enroulement de ladite progression est disposé à proximité de la structure de renfort ;
- un dernier enroulement de ladite progression est le plus éloigné de la structure de renfort.

Ladite progression est de préférence telle que l'enroulement le plus près de la structure de renfort est le plus radialement intérieur de la progression. Ainsi, la distance « d » grandit entre ledit premier enroulement situé radialement le plus près du siège dudit bourrelet et le ledit dernier enroulement situé radialement le plus éloigné dudit siège.

Selon cette variante de réalisation, puisque les fils circonférentiels radialement supérieurs sont positionnés à une plus grande distance de la structure de renfort de type carcasse; cela permet une certaine souplesse de mouvement à cette zone du bourrelet tout en évitant le risque de contact entre les fils circonférentiels et les fils de la structure de renfort.

Selon un mode de réalisation avantageux, l'enroulement le plus près de la structure de renfort est le plus radialement extérieur de la progression. Ainsi, ladite progression est telle que ladite distance « d » diminue entre ledit premier enroulement situé radialement le plus près du siège dudit bourrelet et le ledit dernier enroulement situé radialement le plus éloigné dudit siège.

Ce mode de réalisation peut permettre d'atteindre un niveau de répartition des efforts sensiblement homogène

Selon un mode de réalisation avantageux, la progression est sensiblement régulière.

L'angle α (alpha) entre un alignement filaire et la portion sensiblement voisine de structure de renfort de type carcasse est avantageusement compris entre 10 et 30 degrés.

Selon une variante de réalisation avantageuse de l'invention, ladite progression de la position axiale de chacun des enroulements par rapport à la structure de renfort de type carcasse est agencée de sorte que :
- un premier et un dernier enroulement de ladite progression sont disposés dans le voisinage de la structure de renfort ;
- les enroulements de ladite progression situés entre ce premier et ce dernier enroulement sont plus près de la structure de renfort que ledit premier et ledit dernier enroulement.

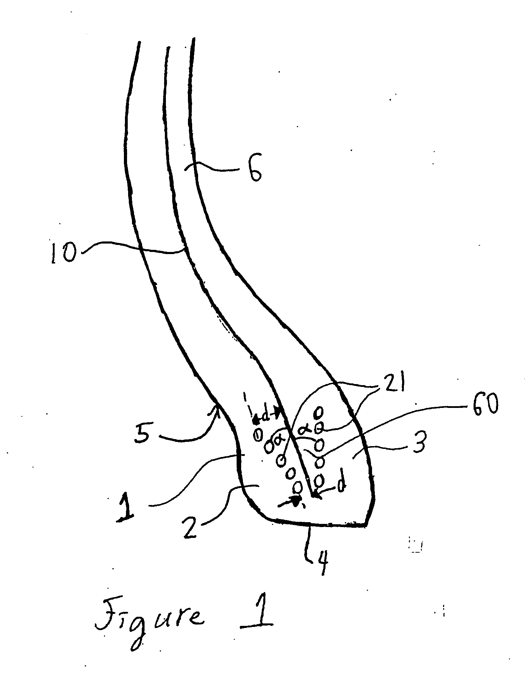

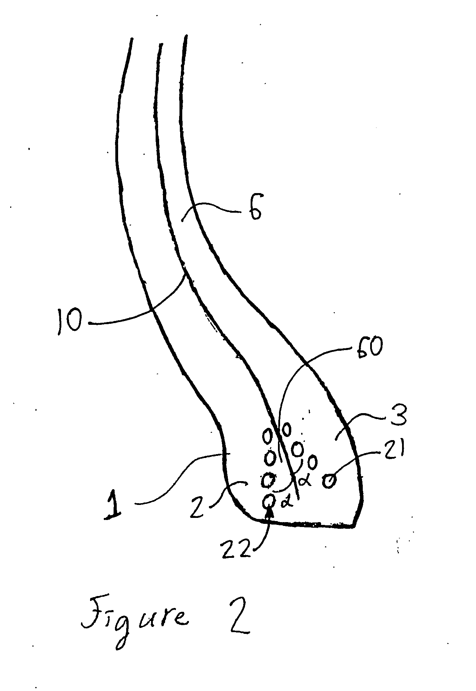

Ladite progression peut former un arc de cercle. Une telle forme d'exécution permet de cumuler les avantages inhérents aux exemples de réalisation des figures 1 et 2.

Un alignement peut comprendre un seul ou plusieurs fils. Les alignements de fils peuvent également être agencés et fabriqués de plusieurs façons. Par exemple, un alignement peut avantageusement être constitué d'un seul fil enroulé (sensiblement à zéro degré) en spirale sur plusieurs tours, de préférence depuis le plus petit diamètre vers le plus grand diamètre. Il peut également être constitué de plusieurs fils concentriques posés l'un dans l'autre, de façon à ce que l'on superpose des anneaux de diamètres progressivement croissants. Il n'est pas nécessaire d'ajouter un mélange de caoutchouc pour assurer l'imprégnation du fil ou des enroulements circonférentiels de fil. Les fils peuvent aussi être discontinus le long du parcours circonférentiel.

Une partie ou la totalité des fils de l'alignement est avantageusement non métallique, et de préférence de type textile, tels des fils à base d'aramide, de polyester aromatique, ou encore d'autres types de fils à modules moins élevés tels des fils à base de PET, nylon, rayonne, etc. Ces fils ont avantageusement un module élastique plus faible que celui des fils métalliques de la zone d'ancrage.

De manière avantageuse, les alignements de fils sont disposés de façon à être en contact avec au moins un mélange de gomme à haut module.

Dans un exemple avantageux, les alignements sont entourés d'un premier côté par un premier mélange et de l'autre côté par un second mélange.

Tous les détails de réalisation sont donnés dans la description qui suit, complétée par les figures 1 à 3 où:
la figure 1 est une coupe radiale montrant essentiellement un flanc et un bourrelet d'une première forme d'exécution d'un pneumatique selon l'invention ;
la figure 2 est une coupe radiale montrant essentiellement un flanc et un bourrelet d'un autre exemple de réalisation de l'invention;
la figure 3 est une coupe radiale montrant essentiellement un flanc et un bourrelet d'un troisième exemple de réalisation de l'invention.

Dans ces figures, des numéros identiques sont utilisés pour représenter des éléments similaires.

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchoutiques et les renforts sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des filaments circonférentiels, le tout étant noyé dans un mélange caoutchoutique d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes; tringles, etc), tandis que d'autres sont réalisés à partir de l'application directe de mélanges et/ou de renforts sous forme de filaments.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les filaments circonférentiels, le mélange caoutchoutique et les portions adjacentes de renfort de flanc d'une zone basse réalisée avec un procédé avec application sur un noyau toroïdal.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements de surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage. Il est également connu d'utiliser la tringle de type traditionnel pour assurer une fonction de serrage du bourrelet sur une jante. L'agencement décrit dans le présent document permet également d'assurer un rôle similaire de serrage.

Dans la présente description, on entend par gomme ou mélange de « liaison », le mélange caoutchoutique éventuellement en contact avec les fils de renforcement, adhérant à ceux-ci et susceptible de remplir les interstices entre fils adjacents.

On entend par "contact" entre un fil et une couche de gomme de liaison le fait qu'au moins une partie de la circonférence extérieure du fil est en contact intime avec le mélange caoutchoutique constituant de la gomme de liaison.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.
On entend par "module d'élasticité" d'un mélange caoutchoutique, un module d'extension sécant obtenu à une déformation d'extension uniaxiale de l'ordre de 10% à température ambiante.

Pour rappel, "radialement vers le haut", ou "radialement supérieur" ou "radialement extérieurement" signifie vers les plus grands rayons.

Une structure de renfort ou de renforcement de type carcasse sera dite radiale lorsque ses fils sont disposés à 90°, mais aussi, selon la terminologie en usage, à un angle proche de 90°.

Par caractéristiques du fil, on entend par exemple ses dimensions, sa composition, ses caractéristiques et propriétés mécaniques (notamment le module), ses caractéristiques et propriétés chimiques, etc.

La distance « d » est la distance entre un fil 21 et la portion voisine de la structure de renfort de type carcasse, mesurée depuis une ligne sensiblement perpendiculaire à ladite structure et passant par le fil.

L'angle « α » (alpha) est l'angle entre la structure de renfort de type carcasse et un axe de l'alignement filaire formé par les fils d'ancrage.

La figure 1 illustre la zone basse, notamment le bourrelet 1 d'une première forme d'exécution du pneumatique selon l'invention. Le bourrelet 1 comporte une portion axialement externe 2 prévue et conformée de façon à être placée contre le rebord d'une jante. La portion supérieure, ou radialement externe de la portion 2 forme une portion adaptée 5 au crochet de jante. Cette portion est souvent incurvée axialement vers l'extérieur, tel qu'illustré aux figures 1 et 2. La portion 2 se termine radialement et axialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6.
Le pneumatique comporte également une structure de renfort 10 ou de renforcement de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

Afin de positionner les fils de renforcement de façon aussi précise que possible, il est très avantageux de confectionner le pneumatique sur support rigide, par exemple un noyau imposant la forme de sa cavité intérieure. On applique sur ce noyau, dans l'ordre requis par l'architecture finale, tous les constituants du pneumatique, qui sont disposés directement à leur place finale, sans que le profil du pneumatique doive être modifié lors de la confection.

Des fils circonférentiels 21 agencés de préférence sous forme de piles 22, forment un agencement de fils d'ancrage, prévu dans chacun des bourrelets. Ces fils sont de préférence métalliques, et éventuellement laitonnés. Diverses variantes prévoient avantageusement des fils de nature textile, comme par exemple en aramide, nylon, PET, PEN, ou hybride. Dans chaque pile, les fils sont avantageusement sensiblement concentriques et superposés.

Afin d'assurer un parfait ancrage de la structure de renfort, on réalise un bourrelet composite stratifié. A l'intérieur du bourrelet 1, entre les alignements de fil de la structure de renfort, on dispose les fils 21 orientés circonférentiellement. Ceux-ci sont disposés en une pile 22 comme sur les figures, ou en plusieurs piles adjacentes, ou en toute disposition judicieuse, selon le type de pneumatique et/ou les caractéristiques recherchées.

Les portions d'extrémité radialement internes de la structure de renfort 10 coopèrent avec les enroulements filaires. Il se crée ainsi un ancrage de ces portions dans lesdits bourrelets. Afin de favoriser cet ancrage, l'espace entre les fils circonférentiels et la structure de renfort est occupé par un mélange caoutchoutique 60 de liaison ou d'ancrage. On peut également prévoir l'utilisation de plusieurs mélanges ayant des caractéristiques différentes, délimitant plusieurs zones, les combinaisons de mélanges et les agencements résultants étant quasi-illimités. A titre d'exemple non limitatif, le module d'élasticité d'un tel mélange peut atteindre ou dépasser 10 à 15 Mpa, et même dans certains cas atteindre, voire dépasser 40 Mpa.

Les arrangements de fils peuvent être agencés et fabriqués de plusieurs façons. Par exemple, une pile peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, de façon à ce que l'on superpose des anneaux de diamètre progressivement croissant. Il n'est pas nécessaire d'ajouter un mélange de caoutchouc pour assurer l'imprégnation du fil de renfort, ou des enroulements circonférentiels de fil.

Les piles 22 sont agencées de façon à produire un ancrage progressif de la structure de renfort de type carcasse. Ainsi, les piles 22 forment un angle ou une inclinaison par rapport à la portion voisine de structure de renfort de type carcasse. Par exemple, à la figure 1, l'angle α est ouvert radialement vers l'extérieur pour chacune des piles 22. Dans la portion radialement externe 2 du bourrelet, la pile est orientée (à mesure que l'on s'écarte du siège 4) radialement et axialement extérieurement, de sorte que la distance « d », entre les fils 21 et la portion voisine de structure de renfort 10 devient de plus en plus grande au fur et à mesure que l'on de dirige radialement extérieurement. La pile 22 située de l'autre côté 3 de la structure 10, est inclinée de façon symétrique, de sorte que la distance « d », entre les fils 21 et la portion voisine de structure de renfort 10 devient de plus en plus grande au fur et à mesure que l'on de dirige radialement extérieurement. Dans ce dernier cas, la pile est orientée (à mesure que l'on s'éloigne du siège 4) radialement extérieurement avec une inclinaison axiale sensiblement nulle, ou légèrement vers l'intérieur.

A la figure 2, l'inclinaison des piles 22 est l'inverse de celui de l'exemple de la figure 1. Ainsi, l'angle α est ouvert radialement vers l'intérieur pour chacune des piles 22. Dans la portion radialement externe 2 du bourrelet, la pile est orientée (à mesure que l'on s'approche du siège 4 radialement intérieurement, avec une inclinaison axiale sensiblement nulle, ou légèrement vers l'intérieur ou vers l'extérieur, de sorte que la distance « d », entre les fils 21 et la portion voisine de structure de renfort 10 devient de plus en plus grande au fur et à mesure que l'on de dirige radialement intérieurement. La pile 22 située de l'autre côté 3 de la structure 10, est inclinée de façon symétrique, de sorte que la distance « d », entre les fils 21 et la portion voisine de structure de renfort 10 devient de plus en plus grande au fur et à mesure que l'on de dirige radialement intérieurement. Dans ce dernier cas, la pile est orientée (à mesure que l'on s'approche du siège 4) radialement et axialement intérieurement.

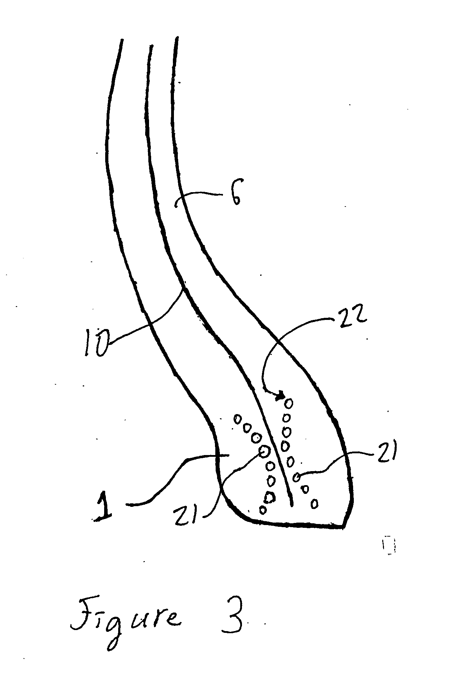

La disposition des piles 22 de l'exemple de réalisation de la figure 3 utilise les particularités des deux exemples précédents. Ainsi, les fils 21 radialement extérieurs sont disposés de façon similaire à ceux de l'exemple de réalisation de la figure 1, tandis que les fils 21 radialement intérieurs sont disposés de façon similaire à ceux de l'exemple de réalisation de la figure 2, formant ainsi une zone centrale dans laquelle les fils sont plus près de la structure de renfort de type carcasse que dans les deux zones d'extrémité radialement interne et externe.

La figure 3 représente un mode de réalisation dans lequel les piles forment deux demi-lunes disposées côte à côte, à l'opposée l'une de l'autre, leurs portions arrondies se faisant face, avec interposition de la structure de renfort de type carcasse, formant ainsi un arrangement sensiblement symétrique. Une telle disposition contribue à l'obtention d'une bonne homogénéité de la zone basse du pneumatique.

Dans tous ces exemples, le nombre de piles de chaque côté de la structure de renfort peut bien évidemment varier. Les piles voisines, situées d'un seul et même côté de la structure 10, sont alors de préférence orientées sensiblement parallèlement.

## Revendications

1. Pneumatique comportant au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement, la structure de renfort de type carcasse s'étendant circonférentiellement depuis le bourrelet vers ledit flanc, une armature de sommet, chacun des bourrelets comportant par ailleurs une zone d'ancrage permettant le maintien de la structure de renfort et comprenant une pluralité d'enroulements filaires circonférentiels coopérant avec la portion adjacente de structure de renfort par l'intermédiaire d'un mélange caoutchoutique d'ancrage, lesdits enroulements filaires de la zone d'ancrage étant agencés de façon à former au moins un alignement filaire s'étendant entre un premier enroulement et un dernier enroulement dans lequel la distance « d » entre le fil dudit premier enroulement et sa portion sensiblement voisine de la structure de renfort de type carcasse et ta distance « d » entre le fil dudit dernier enroulement et sa portion sensiblement voisine de structure de renfort de type carcasse forme une progression de la position axiale de chacun des enroulements par rapport à la structure de renfort de type carcasse, **caractérisé en ce que** la pluralité d'enroulements filaires circonférentiels coopère directement avec la portion adjacente de la structure de renfort.

2. Pneumatique selon la revendication 1, dans lequel ladite progression de la position axiale de chacun des enroulements par rapport à la structure de renfort de type carcasse est agencée de sorte que:
- un premier enroulement de ladite progression est disposé à proximité de la structure de renfort
- un dernier enroulement de ladite progression est le plus éloigné de la structure de renfort.

3. Pneumatique selon l'une des revendications 1 ou 2, dans lequel ladite progression est telle que l'enroulement le plus près de la structure de renfort est le plus radialement intérieur de la progression.

4. Pneumatique selon l'une des revendications 1 ou 2, dans lequel l'enroulement le plus près de la structure de renfort est le plus radialement extérieur de la progression.

5. Pneumatique selon l'une des revendications précédentes, dans lequel ladite progression est sensiblement régulière.

6. Pneumatique selon la revendication 5, dans lequel l'angle α (alpha) entre un alignement filaire et la portion sensiblement voisine de structure de renfort de type carcasse est compris entre 10 et 30 degrés.

7. Pneumatique selon la revendication dans lequel ladite progression de la position axiale de chacun des enroulements par rapport à la structure de renfort de type carcasse est agencée de sorte que :
- un premier et un dernier enroulement de ladite progression sont disposés dans le voisinage de la structure de renfort ;
- les enroulements de ladite progression situés entre ce premier et ce dernier enroulement sont plus près de la structure de renfort.

8. Pneumatique selon l'une des revendications 1 ou 7, dans lequel ladite progression forme un arc de cercle.

## Claims

1. A tyre comprising at least one carcass-type reinforcement structure anchored on either side of the tyre in a bead, the base of which is intended to be mounted on a rim seat, each bead being extended radially towards the outside by a sidewall, the sidewalls radially towards the outside joining a tread, the carcass-type reinforcement structure extending circumferentially from the bead towards said sidewall, a crown reinforcement, each of the beads furthermore comprising an anchoring zone permitting the reinforcement structure to be held and comprising a plurality of circumferential cord windings cooperating with the adjacent portion of the reinforcement structure by means of an anchoring rubber mix, said cord windings of the anchoring zone being arranged so as to form at least one cord alignment extending between a first winding and a last winding in which the distance "d" between the cord of said first winding and its substantially adjacent portion of the carcass-type reinforcement structure and the distance "d" between the cord of said last winding and its substantially adjacent portion of the carcass-type reinforcement structure form a progression from the axial position of each of the windings relative to the carcass-type reinforcement structure; **characterised in that** the plurality of circumferential cord windings cooperates directly with the adjacent portion of the reinforcement structure.

2. A tyre according to Claim 1, in which said progression of the axial position of each of the windings relative to the carcass-type reinforcement structure is arranged such that:
- a first winding of said progression is arranged close to the reinforcement structure
- a last winding of said progression is farthest from the reinforcement structure.

3. A tyre according to one of Claims 1 or 2, in which said progression is such that the winding closest to the reinforcement structure is the radially innermost of the progression.

4. A tyre according to one of Claims 1 or 2, in which the winding closest to the reinforcement structure is the radially outermost of the progression.

5. A tyre according to one of the preceding claims, in which said progression is substantially regular.

6. A tyre according to Claim 5, in which the angle α (alpha) between a cord alignment and the substantially adjacent portion of the carcass-type reinforcement structure is of between 10 and 30 degrees.

7. A tyre according to Claim 1, in which said progression of the axial position of each of the windings relative to the carcass-type reinforcement structure is arranged such that:
- a first and a last winding of said progression are arranged in the vicinity of the reinforcement structure;
- the windings of said progression which are located between this first and this last winding are closer to the reinforcement structure.

8. A tyre according to one of Claims 1 or 7, in which said progression forms an arc of a circle.

## Patentansprüche

1. Luftreifen, der mindestens eine Verstärkungsstruktur vom Karkassentyp, die auf jeder Seite des Luftreifens in einem Wulst verankert ist, dessen Basis auf einen Felgensitz montiert werden soll, wobei sich jeder Wulst radial nach außen in einer Flanke fortsetzt, die Flanken radial nach außen in einem Laufstreifen zusammenlaufen und sich die Verstärkungsstruktur vom Karkassentyp in Umfangsrichtung vom Wulst in Richtung Flanke erstreckt, und eine Scheitelbewehrung aufweist, wobei die Wülste im Übrigen eine Verankerungszone aufweisen, mit der die Verstärkungsstruktur gehalten werden kann und die eine Vielzahl von umlaufenden Drahtwicklungen aufweist, die mit dem angrenzenden Bereich der Verstärkungsstruktur über eine Kautschukmischung zur Verankerung zusammenwirken, wobei die Drahtwicklungen der Verankerungszone so angeordnet sind, dass sie mindestens eine Drahtanordnung bilden, die sich von einer ersten bis zu einer letzten Wicklung erstreckt, wobei der Abstand «d» zwischen dem Draht der ersten Wicklung und dem ihm in etwa benachbarten Bereich der Verstärkungsstruktur vom Karkassentyp und der Abstand «d» zwischen dem Draht der letzten Wicklung und seinem in etwa benachbarten Bereich der Verstärkungsstruktur vom Karkassentyp eine zunehmende Veränderung der axialen Position jeder Wicklung in Bezug auf die Verstärkungsstruktur vom Karkassentyp bildet, **dadurch gekennzeichnet, dass** die Vielzahl von umlaufenden Drahtwicklungen direkt mit dem angrenzenden Bereich der Verstärkungsstruktur zusammenwirkt.

2. Luftreifen nach Anspruch 1, wobei die zunehmende Veränderung der axialen Position jeder Wicklung in Bezug auf die Verstärkungsstruktur vom Karkassentyp so ist, dass
- eine erste Wicklung in dieser veränderlichen Anordnung in der Nähe der Verstärkungsstruktur angeordnet ist,
- eine letzte Wicklung sich in dieser veränderlichen Anordnung am weitesten entfernt von der Verstärkungsstruktur befindet.

3. Luftreifen nach einem der Ansprüche 1 oder 2, wobei die zunehmende Veränderung so ist, dass die Wicklung, die der Verstärkungsstruktur am nächsten liegt, bei dieser veränderlichen Anordnung radial am weitesten innen liegt.

4. Luftreifen nach einem der Ansprüche 1 oder 2, wobei die Wicklung, die der Verstärkungsstruktur am nächsten ist, bei dieser veränderlichen Anordnung die radial am weitesten außen liegende ist.

5. Luftreifen nach einem der vorhergehenden Ansprüche, wobei die zunehmende Veränderung in etwa regelmäßig ist.

6. Luftreifen nach Anspruch 5, bei dem der Winkel α (alpha) zwischen einer Drahtanordnung und dem in etwa benachbarten Teil der Verstärkungsstruktur vom Karkassentyp im Bereich von 10 bis 30 Grad liegt.

7. Luftreifen nach Anspruch 1, bei dem die zunehmende Veränderung der axialen Position jeder Wicklung in Bezug auf die Verstärkungsstruktur vom Karkassentyp so ist, dass:
- eine erste und eine letzte Wicklung der Ausweitung benachbart zur Verstärkungsstruktur angeordnet sind;
- die Wicklungen dieser veränderlichen Anordnung, die sich zwischen der ersten und der zweiten Wicklung befinden, näher an der Verstärkungsstruktur liegen.

8. Luftreifen nach einem der Ansprüche 1 oder 7, bei dem diese veränderliche Anordnung einen Kreisbogen bildet.
